# EUROPÄISCHE PATENTSCHRIFT

(11) **EP 0 783 628 B1**
(45) Veröffentlichungstag und Bekanntmachung des Hinweises auf die Patenterteilung: **22.08.2001**
(21) Anmeldenummer: 96913465.9
(22) Anmeldetag: 04.05.1996
(51) Int. Cl.: F02M 61/18

(54) **BRENNSTOFFEINSPRITZVENTIL**
FUEL INJECTION VALVE
SOUPAPE D'INJECTION DE CARBURANT

(30) Priorität: 28.07.1995 DE 19527626
(43) Veröffentlichungstag der Anmeldung: 16.07.1997
(73) Patentinhaber: ROBERT BOSCH GMBH, 70442 Stuttgart (DE)
(72) Erfinder: ZIMMERMANN, Georg, D-70839 Gerlingen (DE); MAGENAU, Horst, D-70839 Gerlingen (DE); BÜHRING, Jürgen, D-70469 Stuttgart (DE); MÖRSCH, Gilbert, D-70563 Stuttgart (DE); HEYSE, Jörg, D-71706 Markgröningen (DE); KÖNIG, Harald, D-71272 Renningen (DE); KLASKI, Michael, D-71729 Erdmannhausen (DE)
(86) Internationale Anmeldenummer: DE9600777
(87) Internationale Veröffentlichungsnummer: WO9705378

(56) Entgegenhaltungen:
- EP-A- 0 223 018
- DE-A- 3 417 657
- DE-A- 4 328 418
- GB-A- 665 131
- US-A- 1 843 821
- US-A- 5 383 597
- PATENT ABSTRACTS OF JAPAN vol. 9, no. 162 (M-394) [1885] , 6.Juli 1985 & JP,A,60 035169 (HITACHI SEISAKUSHO), 22.Februar 1985,

## Beschreibung

### Stand der Technik

Die Erfindung geht aus von einem Brennstoffeinspritzventil nach der Gattung des Hauptanspruchs. Es ist bereits aus der DE-OS 27 23 280 bekannt, an einem Brennstoffeinspritzventil stromabwärts einer Dosieröffnung ein Brennstoffaufbrechglied in der Form einer ebenen dünnen Scheibe auszuführen, die eine Vielzahl von gebogenen schmalen Schlitzen aufweist. Die bogenförmigen Schlitze, die durch Ätzen in der Scheibe eingebracht sind, sorgen mit ihrer Geometrie, also mit ihrer radialen Breite und ihrer Bogenlänge, dafür, daß ein Brennstoffschleier gebildet wird, der in kleine Tröpfchen aufbricht. Die jeweils in Gruppen angeordneten bogenförmigen Schlitze zerreißen den Brennstoff entsprechend ihrer in der Horizontalen eingebrachten Geometrie. Die einzelnen Schlitzgruppen müssen sehr exakt zueinander eingebracht werden, um das Aufbrechen des Brennstoffs in gewünschter Weise zu erreichen. Über die gesamte axiale Erstreckung des Aufbrechgliedes weisen die bogenförmigen Schlitze jeweils eine konstante Öffnungsweite auf. Die Zerstäubung soll also nur durch die horizontale, radial ausgebildete Geometrie der Schlitze in der Ebene des Aufbrechgliedes verbessert werden. Aufgrund der in Gruppen ausgebildeten Schlitze läßt sich keine vollständig gleichmäßige Zerstäubung des Brennstoffs erzielen.

### Vorteile der Erfindung

Das erfindungsgemäße Brennstoffeinspritzventil mit den kennzeichnenden Merkmalen des Hauptanspruchs hat demgegenüber den Vorteil, daß eine gleichmäßige Feinstzerstäubung des Brennstoffs ohne Zusatzenergie erreicht wird, die eine sehr hohe Zerstäubungsgüte aufweist. Dies wird dadurch erreicht, daß eine am Brennstoffeinspritzventil vorgesehene Düsenplatte wenigstens einen ununterbrochenen Ringspalt aufweist, so daß der vor dem Ringspalt drallbeaufschlagte abzuspritzende Brennstoff unmittelbar stromabwärts des Ringspaltes eine zusammenhängende, ringförmige Strahllamelle bildet. Aufgrund der Geometrie der Düsenplatte bzw. des Ringspaltes besitzt diese Lamelle eine kegelstumpfähnliche bzw. tulpenförmige Gestalt. Durch die Oberflächenspannung wird der Brennstoffkegel in stromabwärtiger Richtung und also mit zunehmendem Durchmesser in seiner Brennstoffilmstärke immer dünner, bis er in kleinste Tröpfchen zerfällt. Diese feinen Tröpfchen weisen einen gegenüber dem Stand der Technik reduzierten sogenannten Sauter Mean Diameter (SMD) auf, also einen verringerten mittleren Tropfendurchmesser des abgespritzten Brennstoffs, wobei SMD von < 60 *µ*m erreichbar sind. Als Konsequenz können u.a. die Abgasemission einer Brennkraftmaschine weiter reduziert und ebenso eine Verringerung des Brennstoffverbrauchs erzielt werden.

Als weiterer Vorteil ergibt sich aus der erfindungsgemäßen Anordnung, daß eine gleichmäßige Verteilung des abgespritzten Brennstoffs auf einer vergleichsweise großen Abspritzfläche erzielt wird. Dadurch liegt eine geringere Tröpfchenpackungsdichte im nach der zerfallenen Lamelle gebildeten Brennstoffspray vor, und eine gute Durchmischung mit der Saugrohrluftströmung der Brennkraftmaschine wird erreicht. Außerdem besteht dann eine geringere Gefahr einer Tröpfchenkoagulation, also einer Wiedervereinigung zu größeren Tropfen.

Von Vorteil ist es zudem, daß durch Veränderung der axialen Ringspalthöhe eine Beeinflussung des Lamellenwinkels möglich ist. Eine Variation der Ringspalthöhe führt jedoch nur zu unwesentlichen Durchflußänderungen, da die Strömung im Ringspalt einseitig abgelöst ist. Somit können der Durchfluß über die Ringspaltweite und der Lamellenwinkel über die Ringspalthöhe getrennt voneinander eingestellt werden.

Durch die in den Unteransprüchen aufgeführten Maßnahmen sind vorteilhafte Weiterbildungen und Verbesserungen des im Hauptanspruch angegebenen Brennstoffeinspritzventils möglich.

Aufgrund des radialen Versatzes des Ringspaltes der Düsenplatte gegenüber dem Eintritt in stromaufwärts des Ringspaltes vorgesehene Drallvertiefungen ergibt sich ein S-förmiger Strömungsverlauf des Fluids in der Düsenplatte. Dadurch erhält die Strömung eine Radialgeschwindigkeitskomponente, die auch im Austritt nicht verlorengeht. Durch den sogenannten S-Schlag mit den Strömungsumlenkungen wird der Strömung eine zerstäubungsfördernde Turbulenz aufgeprägt. Mit Hilfe der Drallvertiefungen, die nicht vollständig radial verlaufen, wird der Strömung neben der Radialkomponente zusätzlich noch eine vorteilhafte Drallkomponente aufgeprägt.

### Zeichnung

Ausführungsbeispiele sind in der Zeichnung vereinfacht dargestellt und in der nachfolgenden Beschreibung näher erläutert. Es zeigen Figur 1 ein teilweise dargestelltes Einspritzventil mit einer erfindungsgemäßen Düsenplatte, Figur 2 ein erstes Ausführungsbeispiel einer Düsenplatte im axialen Schnitt, Figur 3 eine Draufsicht auf diese Düsenplatte und Figur 4 ein zweites Ausführungsbeispiel einer Düsenplatte im axialen Schnitt.

### Beschreibung der Ausführungsbeispiele

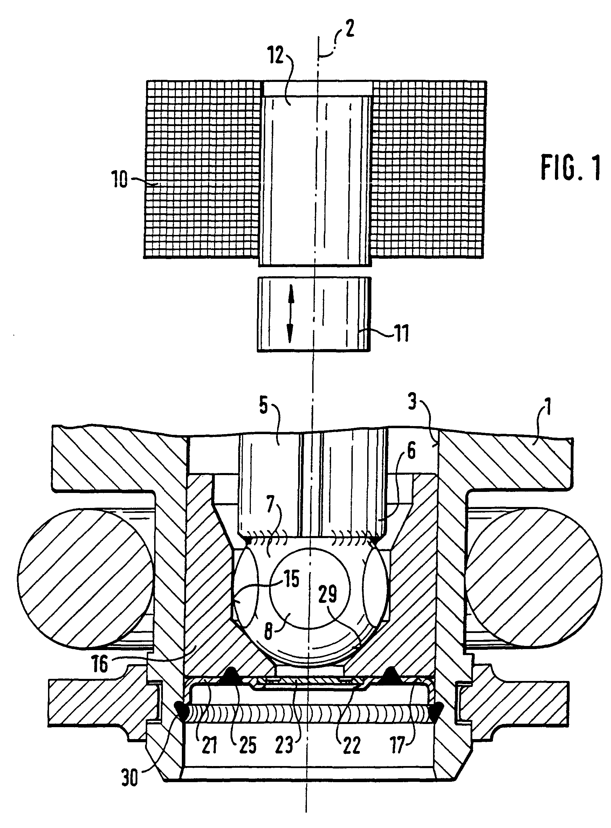

In der Figur 1 ist als ein Ausführungsbeispiel ein Ventil in der Form eines Einspritzventils für Brennstoffeinspritzanlagen von gemischverdichtenden fremdgezündeten Brennkraftmaschinen teilweise dargestellt. Das Einspritzventil hat einen rohrförmigen Ventilsitzträger 1, in dem konzentrisch zu einer Ventillängsachse 2 eine Längsöffnung 3 ausgebildet ist. In der Längsöffnung 3 ist eine z. B. rohrförmige Ventilnadel 5 angeordnet, die an ihrem stromabwärtigen Ende 6 mit einem z. B. kugelförmigen Ventilschließkörper 7, an dessen Umfang beispielsweise fünf Abflachungen 8 vorgesehen sind, verbunden ist.

Die Betätigung des Einspritzventils erfolgt in bekannter Weise, beispielsweise elektromagnetisch. Zur axialen Bewegung der Ventilnadel 5 und damit zum Öffnen entgegen der Federkraft einer nicht dargestellten Rückstellfeder bzw. Schließen des Einspritzventils dient ein angedeuteter elektromagnetischer Kreis mit einer Magnetspule 10, einem Anker 11 und einem Kern 12. Der Anker 11 ist mit dem dem Ventilschließkörper 7 abgewandten Ende der Ventilnadel 5 durch z. B. eine Schweißnaht mittels eines Lasers verbunden und auf den Kern 12 ausgerichtet.

Zur Führung des Ventilschließkörpers 7 während der Axialbewegung dient eine Führungsöffnung 15 eines Ventilsitzkörpers 16. In das stromabwärts liegende, dem Kern 12 abgewandte Ende des Ventilsitzträgers 1 ist in der konzentrisch zur Ventillängsachse 2 verlaufenden Längsöffnung 3 der z. B. zylinderförmige Ventilsitzkörper 16 durch Schweißen dicht montiert. An seiner dem Ventilschließkörper 7 abgewandten, unteren Stirnseite 17 ist der Ventilsitzkörper 16 mit einer z.B. topfförmig ausgebildeten Stützscheibe 21 konzentrisch und fest verbunden, die also unmittelbar an dem Ventilsitzkörper 16 anliegt. Die Stützscheibe 21 weist dabei eine ähnliche Form auf wie bereits bekannte topfförmige Spritzlochscheiben, wobei ein mittlerer Bereich der Stützscheibe 21 mit einer gestuften Durchgangsöffnung 22 versehen ist, um in ihr eine erfindungsgemäße Düsenplatte 23 aufzunehmen.

Die Verbindung von Ventilsitzkörper 16 und Stützscheibe 21 erfolgt beispielsweise durch eine umlaufende und dichte, mittels eines Lasers ausgebildete erste Schweißnaht 25. Durch diese Art der Montage ist die Gefahr einer unerwünschten Verformung der Stützscheibe 21 in ihrem mittleren Bereich mit der Durchgangsöffnung 22 und der darin eingebauten Düsenplatte 23 vermieden. Die Stützscheibe 21 ist des weiteren mit der Wandung der Längsöffnung 3 im Ventilsitzträger 1 beispielsweise durch eine umlaufende und dichte zweite Schweißnaht 30 verbunden.

Die Einschubtiefe des aus Ventilsitzkörper 16, topfförmiger Stützscheibe 21 und Düsenplatte 23 bestehenden Ventilsitzteils in die Längsöffnung 3 bestimmt die Größe des Hubs der Ventilnadel 5, da die eine Endstellung der Ventilnadel 5 bei nicht erregter Magnetspule 10 durch die Anlage des Ventilschließkörpers 7 an einer Ventilsitzfläche 29 des Ventilsitzkörpers 16 festgelegt ist. Die andere Endstellung der Ventilnadel 5 wird bei erregter Magnetspule 10 beispielsweise durch die Anlage des Ankers 11 an dem Kern 12 festgelegt. Der Weg zwischen diesen beiden Endstellungen der Ventilnadel 5 stellt somit den Hub dar.

Der kugelförmige Ventilschließkörper 7 wirkt mit der sich in Strömungsrichtung kegelstumpfförmig verjüngenden Ventilsitzfläche 29 des Ventilsitzkörpers 16 zusammen, die in axialer Richtung zwischen der Führungsöffnung 15 und der unteren Stirnseite 17 des Ventilsitzkörpers 16 ausgebildet ist.

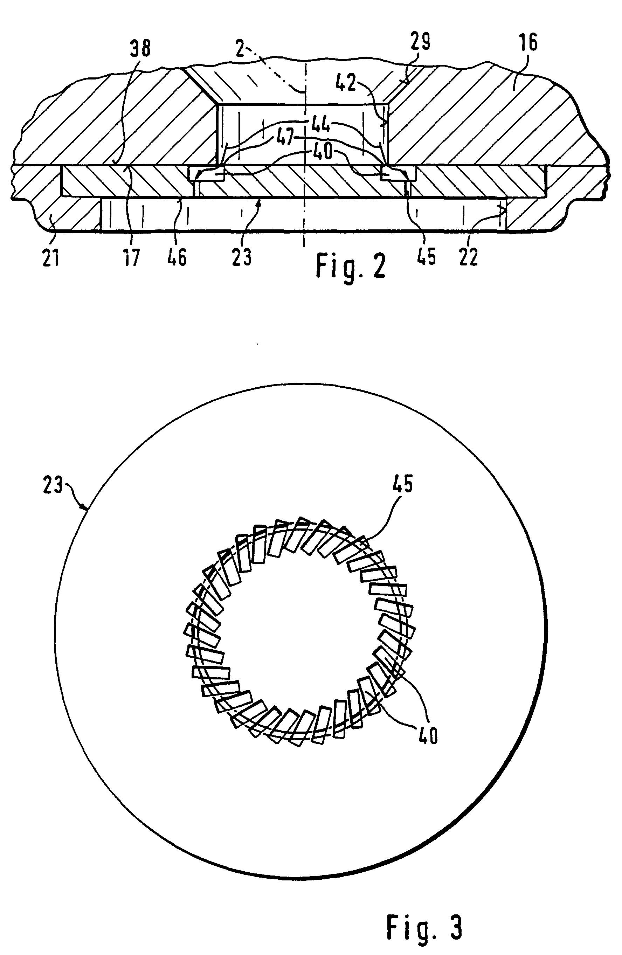

Die Figur 2 zeigt die Düsenplatte 23 im axialen Schnitt und im an einem Einspritzventil angebauten Zustand. Die Düsenplatte 23 ist als ebene, flache, kreisförmige Scheibe ausgeführt. In der Stützscheibe 21 liegt die Düsenplatte 23 zentriert vor. Die Befestigung der Düsenplatte 23 am Einspritzventil und speziell am Ventilsitzkörper 16 erfolgt beispielsweise mittels einer Klemmung, die aufgrund der Kontur der Stützscheibe 21 möglich ist. Eine solche Einspannung als indirekte Befestigung der Düsenplatte 23 am Ventilsitzkörper 16 hat den Vorteil, daß im Gegensatz zu Verfahren wie Schweißen oder Löten eine temperaturbedingte Verformung der feinen Ringspaltgeometrie vollständig vermieden ist. Die gestufte Durchgangsöffnung 22 in der Stützscheibe 21 ist maßlich so exakt gefertigt, daß die Düsenplatte 23 äußerst genau ohne Spannungen aufgenommen werden kann. Anstelle der ebenen Außenkontur kann die Düsenplatte 23 auch eine in axialer Richtung gestufte Außenkontur besitzen. Die Stützscheibe 21 stellt jedoch keineswegs eine ausschließliche Bedingung zur Befestigung der Düsenplatte 23 dar. Da die Befestigungsmöglichkeiten nicht erfindungswesentlich sind, soll hier nur der Verweis auf übliche bekannte Fügeverfahren, wie Schweißen, Löten oder Kleben, erfolgen. Im montierten Zustand liegt eine obere Stirnfläche 38 der Düsenplatte 23 wie das Bodenteil der topfförmigen Stützscheibe 21 an der unteren Stirnseite 17 des Ventilsitzkörpers 16 an.

Die flache Düsenplatte 23 besitzt eine Vielzahl von von der Brennstoffzuströmseite, also der oberen Stirnfläche 38 her offenen, als drallerzeugende Elemente dienenden Drallvertiefungen 40. Die Drallvertiefungen 40 sind gleichmäßig in Kreisform mit gleichen Abständen zueinander in der Düsenplatte 23 verteilt, wobei nur die Gesamtanordnung der Drallvertiefungen 40 kreisförmig ist. Jede Drallvertiefung 40 hat für sich beispielsweise einen rechteckförmigen Querschnitt. Der Durchmesser des Kreises, auf dem die Drallvertiefungen 40 angeordnet sind, ist hauptsächlich von der Öffnungsweite einer stromabwärts der Ventilsitzfläche 29 folgenden Austrittsöffnung 42 im Ventilsitzkörper 16 abhängig. Um einen ungehinderten Brennstoffeintritt in die Düsenplatte 23 und speziell in die Drallvertiefungen 40 zu erreichen, sind die Drallvertiefungen 40 so ausgeführt, daß ihre inneren, zur Ventillängsachse 2 nächstliegenden Bereiche einen kleineren gedachten Durchmesser bilden als der Durchmesser der Austrittsöffnung 42. Die Strömungsverläufe sind schematisch mit Pfeilen 44 in Figur 2 kenntlich gemacht. Die Drallvertiefungen 40 sind nicht vollständig radial verlaufend ausgerichtet, sondern besitzen auch einen genau definierten Anteil in Umfangsrichtung. Die Ausbildung der Drallvertiefungen 40 wird besonders in der Draufsicht auf die Düsenplatte 23 in Figur 3 deutlich. Zu sehen ist hier die schaufelradähnliche Anordnung der weitgehend radial verlaufenden, aber in Umfangsrichtung gekippten Drallvertiefungen 40, die mit ihren Längsachsen an der Ventillängsachse 2 vorbeizielen.

Stromabwärts der Drallvertiefungen 40 folgt unmittelbar in der Düsenplatte 23 ein über den Umfang nicht unterbrochener, enger Ringspalt 45 als Brennstoffaustrittsgeometrie. Der Ringspalt 45 verläuft z. B. mit senkrechten Begrenzungswänden, die sich durch die kostengünstige Herstellbarkeit mit der Galvanoabformtechnik (z. B. MIGA-Technik: Mikrostrukturierung, Galvanoformung, Abformung) ergeben und bis zu einer unteren Stirnfläche 46 der Düsenplatte 23 erstrecken. Die Querschnittsfläche des Ringspalts 45 bestimmt den Durchfluß, wobei die Ringspaltweite üblicherweise zwischen 25 *µ*m und 50 *µ*m liegen wird. Bei einem Durchmesser von ca. 5 mm besitzt die Düsenplatte 23 z. B. eine Dicke zwischen 0,2 mm und 0,4 mm, wobei die axialen Erstreckungen der Drallvertiefungen 40 und des Ringspalts 45 beispielsweise ungefähr gleich sind. Diese Größenangaben zu den Abmessungen der Düsenplatte 23 sowie alle weiteren in der Beschreibung angegebenen Maße dienen nur dem besseren Verständnis und schränken die Erfindung in keiner Weise ein.

Bei diesem Ausführungsbeispiel weist der Ringspalt 45 einen größeren Durchmesser auf als ein gedachter Durchmesser der Einströmbereiche 47 für den Brennstoff in die Drallvertiefungen 40. Als Einströmbereiche 47 sollen die Öffnungsbereiche der Drallvertiefungen 40 verstanden werden, an denen die Drallvertiefungen 40 nicht durch den Ventilsitzkörper 16 überdeckt sind. Der Durchmesser des Ringspalts 45 ist also größer als der Durchmesser der Austrittsöffnung 42 im Ventilsitzkörper 16. Es liegt somit ein radialer Versatz von Einlaß und Auslaß der Düsenplatte 23 vor. Ein zusätzlicher Versatz in Umfangsrichtung ergibt sich zwangsläufig durch die Anordnung der nicht exakt radial verlaufenden Drallvertiefungen 40. Der Ringspalt 45 verläuft stromabwärts der äußeren Radialbereiche der Drallvertiefungen 40, jedoch nur so weit außen, daß der Brennstoff vollständig ohne Überdeckungen von den Drallvertiefungen 40 in den Ringspalt 45 einströmen kann. Im Ringspalt 45 besitzt die Strömung einen Drallanteil, welcher durch den zuvor beschriebenen Verlauf der Drallvertiefungen 40 im Strömungseintritt erzeugt wird. Der Drallanteil führt dazu, daß sich trotz senkrecht in der Düsenplatte 23 eingebrachtem Ringspalt 45 die austretende Flüssigkeitslamelle aufweitet und ein definierter gewünschter Strahlwinkel erzeugbar ist.

Eine Strahlgeometrie mit großer Oberfläche pro Brennstoffmenge ist eine möglichst dünne Flüssigkeitshohllamelle. Eine große Gesamtoberfläche ist gleichbedeutend mit der Aufteilung der Brennstoffmenge in möglichst viele kleine Tröpfchen. Die Lamelle wird bei der erfindungsgemäßen Düsenplatte 23 beim Durchtritt durch den Ringspalt 45 mit möglichst großem Durchmesser geformt. In stromabwärtiger Richtung erfolgt ein Ausdünnen der Lamelle, das durch eine aufgrund der Tulpenform hervorgerufene entsprechende Zunahme des Lamellenumfangs begünstigt wird. Die Tulpenform ergibt sich aus einem Unterdruckkern im mit Umgebungsgas gefüllten, zentralen Lamellenhohlraum. Der Drallanteil trägt zudem zu einer Vergrößerung des Lamellenumfangs bei. Dadurch wird die freie Strahloberfläche weiter vergrößert, und die Lamelle zerfällt in entsprechend kleinere Tröpfchen. Außerdem wird die räumliche Tröpfchenpackungsdichte bei größerem Lamellenquerschnitt geringer, wodurch im Brennstoffspray Tröpfchenwiedervereinigungen zu größeren Tropfen (Tröpfchenkoagulationen) weniger wahrscheinlich sind. Der Lamellenzerfall findet ab einem definierten Axialabstand zum Ringspalt 45 statt. Durch aerodynamische Wechselwirkungen mit dem die Lamelle umgebenden Gas wird die Lamellenoberfläche mit größerem Abstand zur Düsenplatte 23 immer stärker wellig (Taylorsche Schwingungen). Die in der Lamelle vorhandene Instabilität wird mit wachsendem Abstand vom Ringspalt 45 immer größer bis zu einem Punkt, an dem ein schlagartiger Zerfall in kleinste Brennstofftröpfchen erfolgt. Von Vorteil ist es bei dieser Anordnung, daß außer der entstehenden Welligkeit der Lamelle kaum andere Störungen auftreten.

Der Strahlwinkel der austretenden Lamelle läßt sich durch bauliche Maßnahmen variieren und einstellen. Beeinflußbar ist der Strahlwinkel z. B. durch:
- den Verlauf der Drallvertiefungen 40 (Verhältnis von Radialanteil zu Anteil in Umfangsrichtung),
- das Verhältnis von äußerem Durchmesser der Drallvertiefungen 40 zu dem Durchmesser des Ringspalts 45,
- den Überdeckungsgrad, also der Größe der Überdeckung der Drallvertiefungen 40.

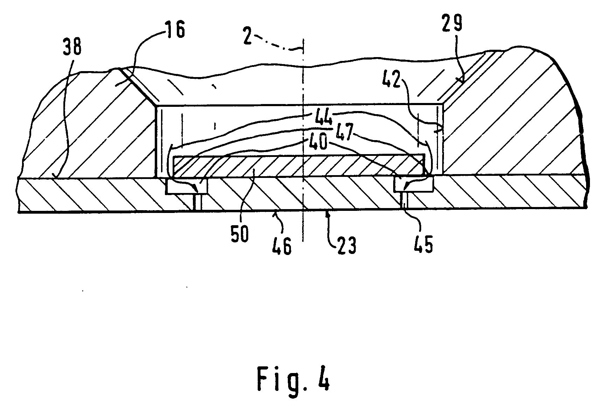

In der Figur 4 ist im axialen Schnitt ein zweites Ausführungsbeispiel einer Düsenplatte 23 dargestellt, die sich im wesentlichen von der Düsenplatte 23 der Figuren 2 und 3 nur dadurch unterscheidet, daß der S-förmige Strömungsverlauf in der Düsenplatte 23 in umgekehrter Ausrichtung erfolgt, da der Ringspalt 45 mit kleinerem Durchmesser als die Austrittsöffnung 42 und damit als die Einströmbereiche 47 in die Drallvertiefungen 40 ausgebildet ist. Um den radialen Versatz von Einlaß und Auslaß der Düsenplatte 23 zu gewährleisten, ist es zweckmäßig, auf der Düsenplatte 23 an ihrer oberen Stirnfläche 38 eine zusätzliche dünne, z. B. kreisförmige Abdeckscheibe 50 vorzusehen. Diese Abdeckscheibe 50 hat einen solchen Außendurchmesser, daß die Drallvertiefungen 40 außen nicht ganz abgedeckt werden und damit die Einströmbereiche 47 in einer gewünschten vorgegebenen Größe entstehen. Die Austrittsöffnung 42 des Ventilsitzkörpers 16, in der sich nun die Abdeckscheibe 50 befindet, weist jetzt einen größeren Durchmesser auf als ein gedachter Durchmesser durch die äußeren Randbereiche der Drallvertiefungen 40.

Weitere nicht dargestellte Ausführungsbeispiele ergeben sich durch den vollständigen Verzicht einer Überdeckung der Drallvertiefungen 40 bzw. durch konstruktiv anders gestaltete Überdeckungen. So ist es denkbar, ähnlich der Abdeckscheibe 50 zusätzliche Schichten unmittelbar an der Düsenplatte 23 bei deren Herstellung mitauszubilden, die dann die Abdeckfunktion übernehmen.

In Kurzform wird im folgenden ein besonders geeignetes und bevorzugtes Herstellungsverfahren für die Düsenplatte 23 erläutert. Ausgangspunkt für das Verfahren ist ein ebenes und stabiles Substrat, das z. B. aus Silizium, Glas oder Keramik bestehen kann. Die üblichen Dicken dieser Substratplatte liegen zwischen 0,5 mm und 2 mm. Nach der Reinigung des Substrats wird zunächst wenigstens eine Hilfsschicht auf das Substrat aufgalvanisiert. Dabei handelt es sich beispielsweise um eine Galvanikstartschicht (z. B. Cu), die zur elektrischen Leitung für die spätere Galvanik benötigt wird. Diese Hilfsschicht kann auch als Stopschicht für die nachfolgenden Mikrostrukturierungsverfahren bzw. als Opferschicht dienen, um später ein einfaches Vereinzeln der Düsenplatten 23 z. B. durch Ätzung zu ermöglichen. Anschließend wird auf die Hilfsschicht eine mikrostrukturierbare Schicht ganzflächig aufgebracht. Dafür bietet sich besonders das Auflaminieren eines thermoplastisch verformbaren Kunststoffs (z. B.

Polymethylmethacrylat PMMA) an, der dann folienartig auf der Hilfsschicht aufliegt.

Über eine Maske erfolgt dann die Strukturierung dieser Schicht. Die Mikrostrukturierung kann besonders wegen der hohen Präzision durch Diamantdrehen oder Ablatieren mittels Excimerlasers vorgenommen werden. Der z. B. zur Mikrostrukturierung verwendete Excimerlaser zeichnet sich durch eine sehr hohe Leistungsdichte und eine kurze Wellenlänge (typisch λ = 193 nm) aus. Nach dieser Bearbeitung verbleibt eine Galvanikmaske in der PMMA-Schicht. Um die Galvanikmaske wird nachfolgend in einem galvanischen Bad Metall aufgalvanisiert. Das Metall legt sich durch das Galvanisieren eng an die Kontur der Galvanikmaske an, so daß die vorgegebenen Konturen formtreu in ihm reproduziert werden. Üblicherweise kommen beim Galvanisieren Ni, NiCo, NiFe oder Cu zum Einsatz.

Entsprechend dem gewünschten Aufbau der Düsenplatte 23 können nun die Verfahrensschritte der Mikrostrukturierung und Galvanoabformung wiederholt werden. Nach Abschluß der Galvanikprozesse werden die Galvanikmasken entfernt. Bei Verwendung von PMMA für die zu strukturierenden Schichten eignet sich besonders Essigsäureäthylester zum Ablösen. Nach diesem Herauslösen liegt die Düsenplatte 23 auf dem Substrat bereits in fertiger Ausführungsform vor. Abschließend erfolgt das Vereinzeln der Düsenplatten 23. Dazu werden die Hilfsschichten durch Ätzung entfernt und die Düsenplatten 23 vom Substrat abgehoben.

Ein anderes, sehr ähnliches Herstellungsprinzip sieht vor, entsprechend der MIGA-Technik in oben beschriebener Form Abformwerkzeuge herzustellen, die genau invers (Negativstruktur) zu den gewünschten Düsenplatten 23 ausgebildet sind. Dabei führen besonders hohe Stückzahlen der an den Abformwerkzeugen abzuformenden Düsenplatten 23 zu einer kostengünstigen rentablen Fertigung. Diese Abformwerkzeuge als Negative der Düsenplatten 23 sollen so exakt bearbeitet sein, daß sie mindestens zehntausendmal bei gleichbleibender Qualität einsetzbar sind.

Zur Herstellung der Düsenplatten 23 bietet sich ebenfalls die UV-Tiefenlithographie an. Auf ein Substrat wird hierbei gleichfalls eine Hilfsschicht (Opferschicht, Galvanikstartschicht) aufgebracht, auf die ein Photoresist auflaminiert, aufgeschleudert oder aufgesprüht wird. Die zu realisierende Struktur wird dann mit Hilfe einer photolithographischen Maske invers in den Photoresist übertragen (UV-Belichtung). Nach der Entwicklung des UV-belichteten Photoresists ergibt sich eine durch die Maske vorbestimmte Struktur im Photoresist, die eine Negativstruktur zur späteren gewünschten Schicht der Düsenplatte 23 darstellt. Die verbleibende Photoresiststruktur wird nun galvanisch mit Metall aufgefüllt. Die Verfahrensschritte nach dem Galvanisieren, wie das Herauslösen der Hilfsschichten und das Ablösen der Düsenplatten 23 vom Substrat, verlaufen in gleicher Weise wie bei den oben beschriebenen Verfahren.

## Patentansprüche

1. Brennstoffeinspritzventil für Brennstoffeinspritzanlagen von Brennkraftmaschinen, mit einer Ventillängsachse (2), mit einem Ventilschließkörper (7), der mit einer Ventilsitzfläche (29) zusammenwirkt, mit einer Düsenplatte (23) stromabwärts der Ventilsitzfläche (29), die einen vollständigen Durchgang für den Brennstoff aufweist, dadurch gekennzeichnet, daß die Düsenplatte (23) zuströmseitig eine Vielzahl von drallerzeugenden Elementen (40) aufweist, denen in stromabwärtiger Richtung wenigstens ein in der Düsenplatte (23) selbst eingebrachter, ununterbrochener Ringspalt (45) folgt, wobei die drallerzeugenden Elemente (40) in direkter Verbindung mit dem Ringspalt (45) stehen und der Ringspalt (45) die Abspritzgeometrie bildet.

2. Brennstoffeinspritzventil nach Anspruch 1, dadurch gekennzeichnet, daß die Ringspaltweite des Ringspaltes (45) 25 *µ*m bis 50 *µ*m beträgt.

3. Brennstoffeinspritzventil nach Anspruch 1, dadurch gekennzeichnet, daß die drallerzeugenden Elemente als Drallvertiefungen (40) mit rechteckförmigem Querschnitt ausgebildet sind.

4. Brennstoffeinspritzventil nach Anspruch 1 oder 3, dadurch gekennzeichnet, daß die drallerzeugenden Elemente (40) in der Düsenplatte (23) in einer Kreisform angeordnet sind und insgesamt in der Draufsicht auf die Düsenplatte (23) schaufelradähnlich verlaufen.

5. Brennstoffeinspritzventil nach Anspruch 4, dadurch gekennzeichnet, daß die schaufelradähnliche Anordnung der drallerzeugenden Elemente (40) dadurch entsteht, daß jedes einzelne Element (40) weitgehend radial verläuft und in Umfangsrichtung gekippt ist und die Elemente (40) in Kreisform hintereinander angeordnet sind.

6. Brennstoffeinspritzventil nach Anspruch 1, dadurch gekennzeichnet, daß Einströmbereiche (47) für den Brennstoff in die drallerzeugenden Elemente (40) der Düsenplatte (23) auf einem kleineren Durchmesser liegen als der Durchmesser des Ringspalts (45), so daß ein radialer Versatz von Einlaß und Auslaß der Düsenplatte (23) vorhanden ist.

7. Brennstoffeinspritzventil nach Anspruch 1, dadurch gekennzeichnet, daß die Düsenplatte (23) mittels Mikrostrukturierungsverfahren in Kombination mit Galvanoabformung herstellbar ist.

8. Brennstoffeinspritzventil nach Anspruch 7, dadurch gekennzeichnet, daß die Düsenplatte (23) unter anderem durch Diamantdrehen als Mikrostrukturierungsverfahren herstellbar ist.

9. Brennstoffeinspritzventil nach Anspruch 7, dadurch gekennzeichnet, daß die Düsenplatte (23) unter anderem durch Ablatieren mittels eines Excimerlasers als Mikrostrukturierungsverfahren herstellbar ist.

10. Brennstoffeinspritzventil nach Anspruch 7, dadurch gekennzeichnet, daß die Düsenplatte (23) unter anderem durch UV-Tiefenlithographie als Mikrostrukturierungsverfahren herstellbar ist.

## Claims

1. Fuel injection valve for fuel injection systems of internal combustion engines, with a longitudinal valve axis (2), with a valve-closing body (7) that interacts with a valve seat surface (29), with a nozzle plate (23) downstream of the valve seat surface (29), which has a complete passage for the fuel, characterized in that, on the inflow side, the nozzle plate (23) has a multiplicity of swirl-producing elements (40), which are followed in the downstream direction by at least one uninterrupted annular gap (45) made in the nozzle plate (23) itself, the swirl-producing elements (40) being connected directly to the annular gap (45), and the annular gap (45) forming the discharge geometry.

2. Fuel injection valve according to Claim 1, characterized in that the width of the annular gap (45) is 25 µm to 50 µm.

3. Fuel injection valve according to Claim 1, characterized in that the swirl-producing elements are designed as swirl depressions (40) of rectangular cross section.

4. Fuel injection valve according to Claim 1 or 3, characterized in that the swirl-producing elements (40) in the nozzle plate (23) are arranged in a circle and overall, in a plan view of the nozzle plate (23), form a pattern that resembles a vane wheel.

5. Fuel injection valve according to Claim 4, characterized in that the arrangement of the swirl-producing elements (40) in a manner that resembles a vane wheel is produced by virtue of the fact that each individual element (40) extends in a largely radial direction and is tilted in a circumferential direction and that the elements (40) are arranged one behind the other in a circle.

6. Fuel injection valve according to Claim 1, characterized in that inflow zones (47) for the inflow of fuel into the swirl-producing elements (40) of the nozzle plate (23) are situated on a smaller diameter than the diameter of the annular gap (45), with the result that there is a radial offset between the inlet and the outlet of the nozzle plate (23).

7. Fuel injection valve according to Claim 1, characterized in that the nozzle plate (23) can be produced by means of microstructuring methods in combination with reproduction by electroforming.

8. Fuel injection valve according to Claim 7, characterized in that the nozzle plate (23) can be produced, inter alia, by means of diamond turning as the microstructuring method.

9. Fuel injection valve according to Claim 7, characterized in that the nozzle plate (23) can be produced, inter alia, by ablation by means of an excimer laser as the microstructuring method.

10. Fuel injection valve according to Claim 7, characterized in that the nozzle plate (23) can be produced, inter alia, by deep UV lithography as the microstructuring method.

## Revendications

1. Injecteur de carburant pour des installations d'injection de carburant de moteurs à combustion interne ayant un axe longitudinal (2), un organe d'obturation (7) coopérant avec une surface formant siège de soupape (29), une plaque à buse (23) en aval de la surface formant siège de soupape (29), présentant un passage complet pour le carburant,
caractérisé en ce que
- la plaque à buse (23) présente, du côté de l'alimentation, un grand nombre d'éléments (40) générant une rotation, suivis en aval par au moins un intervalle annulaire (45) ininterrompu, réalisé directement dans la plaque à buse (23), et
- les éléments (40) générant la rotation sont directement en relation avec l'intervalle annulaire (45) et l'intervalle annulaire (45) définit la géométrie d'éjection.

2. Injecteur de carburant selon la revendication 1,
caractérisé en ce que
la largeur de l'intervalle annulaire (45) est comprise entre 25 µm et 50 µm.

3. Injecteur de carburant selon la revendication 1,
caractérisé en ce que
les éléments générant la rotation sont des cavités (40) à section rectangulaire.

4. Injecteur de carburant selon la revendication 1 ou 3,
caractérisé en ce que
les éléments générant la rotation (40) sont prévus dans la plaque à buse (23) selon une répartition circulaire et globalement, en vue de dessus, ils sont disposés dans la plaque à buse (23) selon l'image d'une roue à aubes.

5. Injecteur de carburant selon la revendication 4,
caractérisé en ce que
la disposition analogue à celle d'une roue à aubes pour les éléments (40) générant une rotation, est formée en ce que chacun des éléments (40) est dirigé très largement dans la direction radiale en étant basculé dans la direction périphérique, ces éléments (40) étant disposés les uns derrière les autres suivant un cercle.

6. Injecteur de carburant selon la revendication 1,
caractérisé en ce que
les zones d'entrée de carburant (47) dont les éléments (40) génèrent la rotation de la plaque à buse (23), sont situées sur un diamètre plus petit que celui de l'intervalle annulaire (45), ce qui donne un décalage radial entre l'entrée et la sortie de la plaque à buse (23).

7. Injecteur de carburant selon la revendication 1,
caractérisé en ce que
la plaque à buse (23) est réalisée par un procédé de microstructuration combiné à un moulage galvanique.

8. Injecteur de carburant selon la revendication 7,
caractérisé en ce que
la plaque à buse (23) se réalise entre autres par un travail au diamant comme procédé de microstructuration.

9. Injecteur de carburant selon la revendication 7,
caractérisé en ce que
la plaque à buse (23) se réalise entre autres par ablation à l'aide d'un laser Excimer comme moyen de microstructuration.

10. Injecteur de carburant selon la revendication 7,
caractérisé en ce que
la plaque à buse (23) se réalise entre autres par lithographie profonde aux rayons ultraviolets comme procédé de microstructuration.
